# EUROPEAN PATENT APPLICATION

(11) **EP 1 944 957 A2**
(43) Date of publication of application: **16.07.2008**
(21) Application number: 08000097.9
(22) Date of filing: 04.01.2008
(51) Int. Cl.: H04M 11/00

(54) **System and method for selectively coupling various communication devices through common channel**

(30) Priority: 12.01.2007 TW 96101327
(71) Applicant: Chen, Scanner, Xizhi City T'ai pei 221 (TW)
(72) Inventor: Chen, Scanner, Xizhi City T'ai pei 221 (TW)
(74) Representative: Muttock, Neil John

(57) **Abstract**

A communication system with a common channel (5) for selectively coupling a subscriber line port (410, 420) of a telephone system (4, 4a) to one of a plurality of voice communication devices including a fixed network communication module (51), an internet-based phone module (52), and a wireless internet-based phone module (53) is provided. When a phone unit (411, 421) of the telephone system (4) dials a called end phone number, the telephone system (4, 4a) is connected to the common channel (5), a ring current generated by the ring current generator (63) is then supplied to the phone unit (411, 421), the called end phone number is decoded by the tone decoder (641), and thereby the microprocessor (7) in correspondence to the called end phone number couple the telephone system (4, 4a) to one of the fixed network communication module (51), the internet-based phone module (52), or the wireless internet-based phone module (53) to establish a voice communication therebetween according to a preset data table stored in the memory (8).

## Description

### FIELD OF THE INVENTION

The present invention relates to a technology for communicating various communication devices, and more specifically to it system and method for selectively coupling various communication devices through a common channel.

### BACKGROUND OF THE INVENTION

Nowadays, the conventional voice communication systems include mobile phone network. Public Switched Telephone Network (PSTN), Voice Over Internet Protocol (VoIP Gate Way) network (internet-based phone), and Instant Message (IM). Various communications may be established between two mobile phone networks, two Public Switched Telephone Networks, two Voice Over Internet Protocol GateWay networks, and two Instant Message networks. By using the same communicating devices, the communication cost would be cheaper.

### SUMMARY OF THE INVENTION

A primary object of the present invention is to provide a communication system for selectively coupling various communication devices through a common channel. The present invention expands the subscriber line port of a conventional exchanger telephone system or key telephone system has ability of selectively coupling various voice communication devices including a fixed network communication module, an internet-based phone module, and a wireless internet-based phone module.

Another object of the present invention is to provide a communication system capable of identifying the called end phone number and then coupling the telephone system to one of the fixed network communication module, the internet-based phone module, or the wireless internet-based phone module to establish a voice communication therebetween in correspondence to the called end phone number.

To fullfill the above objects, the present invention provides a communication system with a common channel for selectively coupling a subscriber line port of a telephone system to one of a plurality of voice communication devices including a fixed network communication module, an internet-based phone module, and a wireless internet-based phone module is provided. When a phone unit of the telephone system dials a called end phone number, the telephone system is connected to the common channel, a ring current generated by the ring current generator is then supplied to the phone unit, the called end phone number is decoded by the tone decoder, and thereby the microprocessor in correspondence to the called end phone number couple the telephone system to one of the fixed network communication module, the internet-based phone module, or the wireless internet-based phone module to establish a voice communication therebetween according to a preset data table stored in the memory.

### BRIEF DESCRIPTION OF THE DRAWINGS

FIG. 1 is a functional block diagram of a system of the present invention;
FIG. 2 shows a further circuit diagram of a fixed network communication interface of FIG 1;.
FIG, 3 shows a further circuit diagram of the internet-based phone module interface of FIG 1;
FIG 4 shows a further circuit diagram of a wireless internet-based phone module interface of FIG. 1;
FIG. 5 shows a circuit diagram of a call out detection circuit of FIG. 1 connecting an exchanger (PBX); and

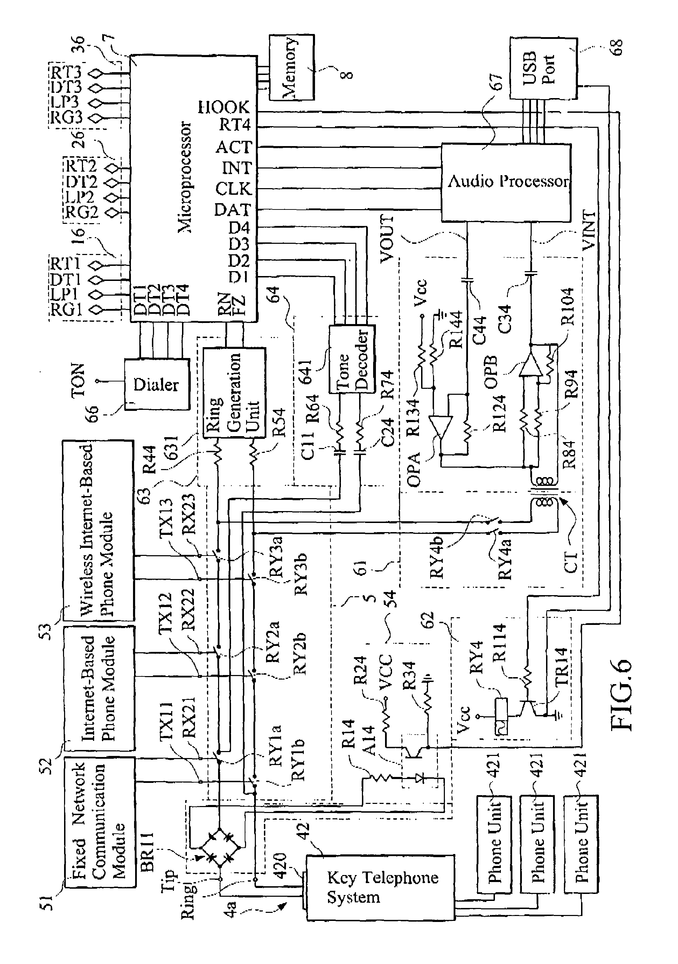

FIG. 6 shows a circuit diagram of the call out detection circuit of FIG. 1 connecting a key telephone system (KTS).

### DETAILED DESCRIPTION OF THE PREFERRED EMBODIMENTS

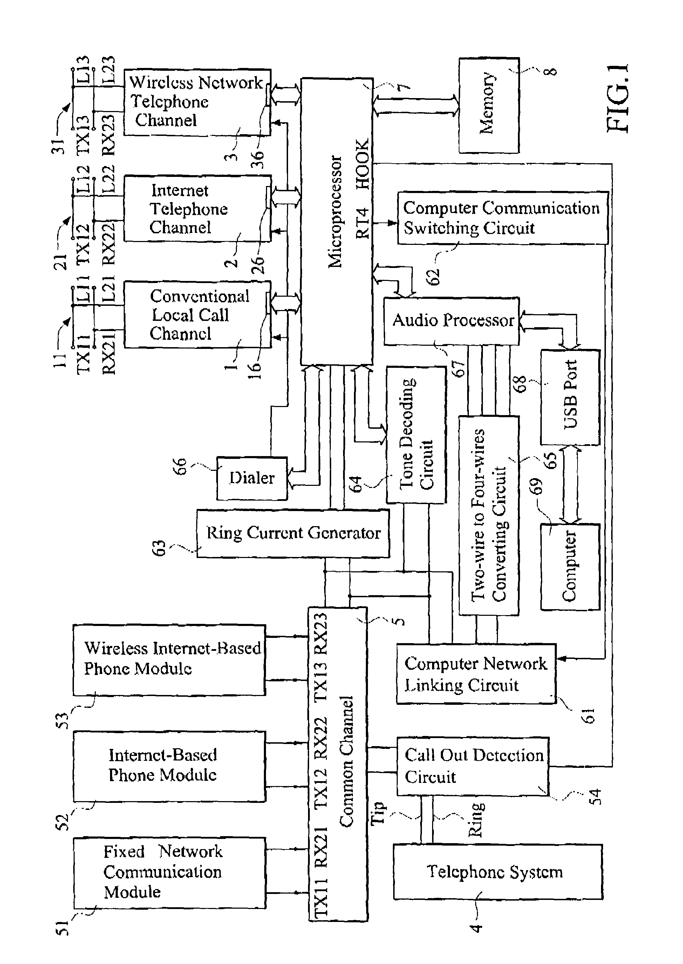

As shown in FIG. 1, the present invention mainly comprises a fixed network communication module interface 1, an internet-based phone module interface 2, a wireless internet-based phone module interface 3, a call out detection circuit 54, a common channel 5, a computer network linking circuit 61, a computer communication switching circuit 62, a ring current generator 63, a tone decoding circuit 64, a two-wire to four-wire converting circuit 65, a dialer 66, an audio processor 67, a USB port 68, a microprocessor 7 and a memory 8. The USB port 68 is connected to a computer 69.

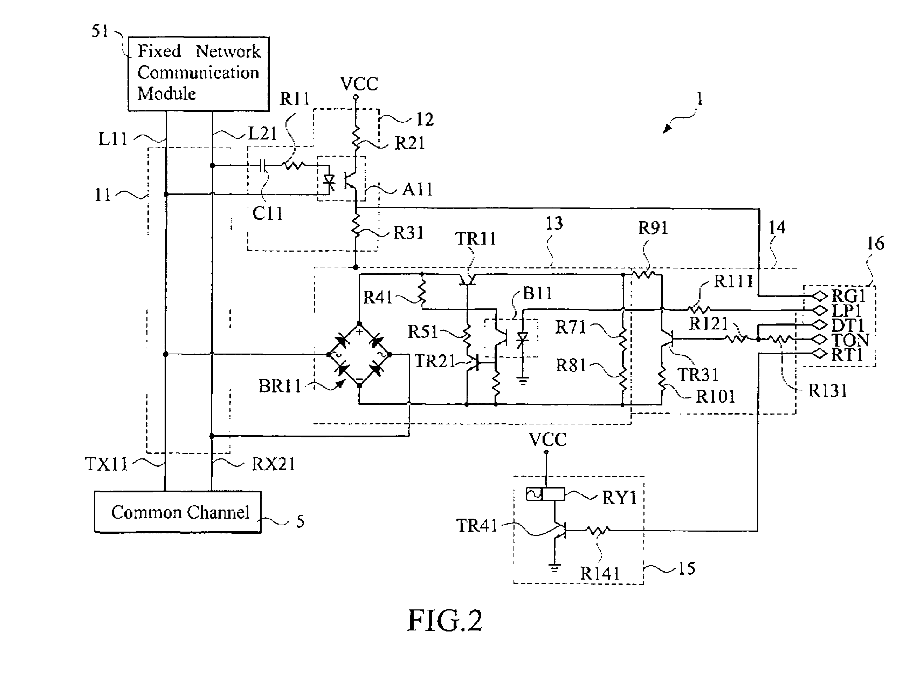

Referring to FIG 2, the fixed network communication module interface 1 is connected to a conventional local call channel 11. The fixed network communication module interface 1 comprises an incoming call detection circuit 12, a loop control circuit 13, a calling circuit 14 and a switching circuit 15. Signal lines RG1, LP1, DT1, TON, RT1 are connected to the microprocessor via port 16.

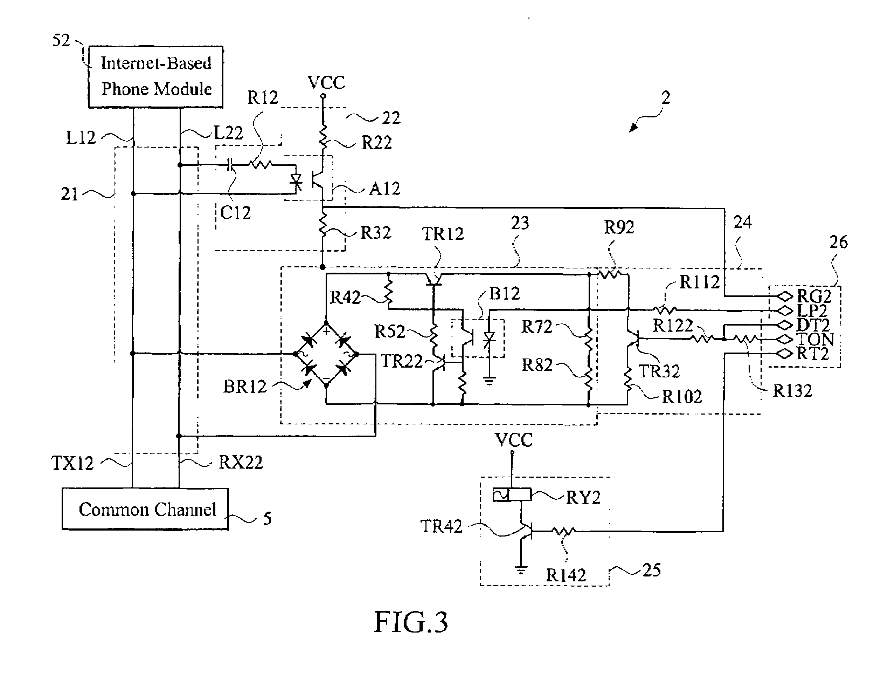

As shown in FIG. 3, the internet-based phone module interface 2 is connected to an internet telephone channel 21 and comprises an incoming call detection circuit 22, a loop control circuit 23, a calling circuit 24 and a switching circuit 25. Signal lines RG2, LP2, DT2, TON, RT2 are connected to the microprocessor 7 via port 26.

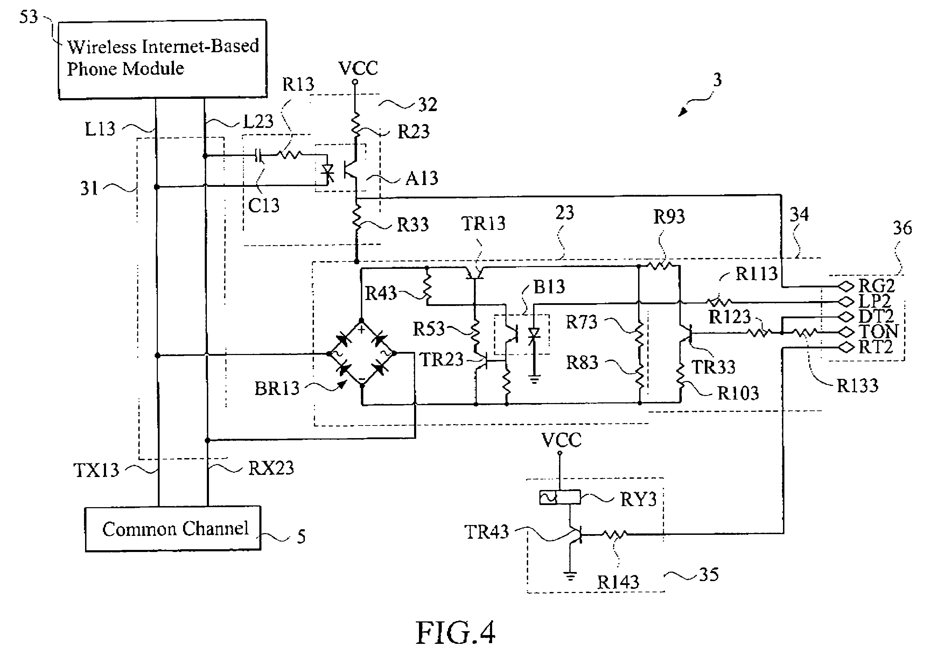

As shown in FIG. 4, the wireless internet-based phone module interface 3 is connected to a wireless network telephone channel 31 and comprises an incoming call detection circuit 32, a loop control circuit 33, a calling circuit 34 and a switching circuit 35. Signal lines RG3, LP3, DT3, TON, RT3 are connected to the microprocessor 7 via port 36.

When the exchanger or key telephone system needs to dial up various kind of communication network, it is connected to the present invention via subscriber line port, through the common communication link to the ring current generator which supplies the fundamental communication power supply of the exchanger or the key telephone system. After extracting and encoding the called telephone number which the subscriber dials up, it selects and connects the corresponding communication network module automatically and forwards the telephone number of called party, then switches and connects the module to constitute communication.

In the present invention in addition to control the transfer and select different kind of communication network module, it is also required to detect the demand of incoming call for each function module device and forwards the incoming call ringing signal according to the module feature or have the module of the incoming call connect the common communication link to constitute the call function of the incoming call.

The present invention also transmits busy tone according to the busy state of the common communication link respectively to prevent the confusion phenomenon of no response for the incoming call or out of order about the called party.

### Illustration for each function module circuit

As shown in FIG. 2, it shows a further circuit diagram of the fixed network communication module interface 1 of FIG. 1. The incoming call detection circuit 12 comprises a capacitor C11, resistors R11, R21, R31 and an optical coupler A11. The capacitor C11 and optical coupler A11 are crossed between line ends L11, L21 to detect the ringing current of the incoming call of a fixed network communication module 51 which is connected to a conventional local call network 1 and transmits to the microprocessor 7 for processing via signal end RG1.

The loop control circuit 13 comprises a rectifier BR11, resisters R41, R51, transistors TRI1, TR21, resistors RH1, R71, R81, R111 and an optical coupler B11. The optical coupler B1 1 is driven via microprocessor 7 and via signal end 1,P to have transistors TR21, TR1 connected. Rectifier BR11 guides the direct current crosses the both ends of the local call lines L11, L21 to the resistors R71, R81 via transistor TR11 to build up the direct current loop required for communication to activate or respond the fixed network communication device 11 connecting local call line L11, L21.

The calling circuit 14 comprises a transistor TR31, resistors R91 and R101, R121, R131. When it is needed to call the fixed network communication module 51, the microprocessor 7 sends DTMF audio frequency signal via signal ends DTI, TON and the calling signal is presented in local line L11, L21 via the loop control circuit 13 after it is amplified by transistor TR31 and received by the fixed network communication module 51.

The switching circuit 15 comprises a relay RY1, a transistor TR41 and a resistor R141. When it is required to respond the calling from the fixed network communication module 51, the microprocessor 7 drives relay RY 1 to work via signal end RT1 and the fixed network communication module 51is connected to the common channel 5, entered into the subscriber line port of the exchanger or key telephone system 4 to build up the calling function of the incoming call. On the contrary, when it detects the called number transmitted by the subscriber line port of the exchanger or key telephone system 4, the microprocessor 7 drives the corresponding switching circuit 15, 25 or 35 according to the network feature of the called party telephone number and connects to the corresponding module 51, 52 or 53 via the common channel 5 to build up the calling function.

FIG. 3, FIG. 4 show further circuit diagrams of the fixed network communication module interface 1, the internet-based phone module interface 2 and the wireless internet-based phone module interface 3 of FIG. 1 respectively which the interior circuit diagram thereof is similar to that of FIG. 2.

The incoming call detection circuit 22 of FIG 3 comprises a capacitor C12, resistors R12, R22, R32 and an optical coupler A 12. The loop control circuit 23 comprises rectifier BR 12, resistors R42, R52, transistors TR12, TR22, resistor R62, R72, R82, R112 and an optical coupler B12. The calling circuit 24 comprises transistor TR32 and resistors R92, R 102, R 122, R 132. The switching circuit 25 comprises a relay RY2, a transistor TR42 and a resistor R142. The internet-based phone module interface 2 is connected with the microprocessor 7 via signal ends RG2, LP2, DT2, TON and RT2. Line ends L12, L22 are connected to the internet-based phone module 52.

The incoming call detection circuit 32 of FIG. 4 comprises a capacitor C 13, resistors R13, R23, R33 and an optical coupler A 13. The loop control circuit 33 comprises a rectifier BR13, resistors R34, R53, transistors TR13, TR23, resistors R63, R73, R83, R113 and an optical coupler 1313. The calling circuit 34 comprises transistor TR33, resistors R93, R103, R123 and R133. The switching circuit 35 comprises a relay RY3, a transistor TR43 and a resistor R143. The wireless internet-based phone module interlace 3 is connected to the microprocessor 7 via signal ends RG3, LP3, DT3, TON and RT3. Line ends L13, L23 are connected to the wireless internet-based phone module 53.

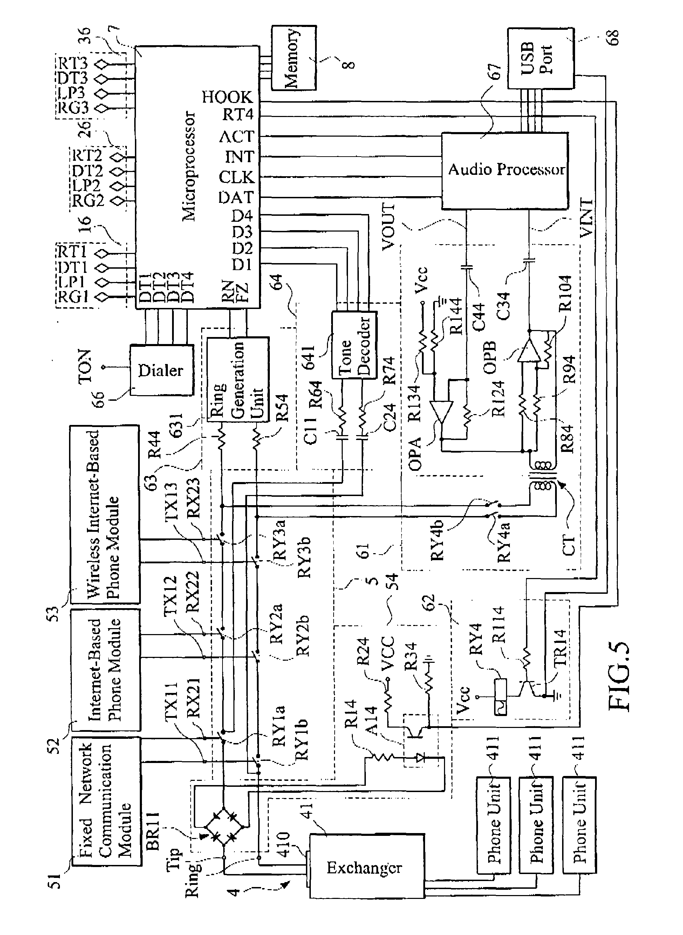

The exchanger or key telephone system 4 of FIG. 1 can be a conventional exchanger (PBX) or a key telephone system (KTS). FIG. 5 shows a circuit diagram of the call out detection circuit 54 of FIG 1 connecting to an exchanger (PBX).

The call out detection circuit 54 comprises a rectifier BR 14, resistors R 14, R24, R34 and an optical coupler A 14. The telephone system connection ends Tip and Ring are connected to the subscriber line port 410 of the exchanger 41 of the exchanger (PBX) telephone system 4. When the phone unit 411 connecting the exchanger 4 1occupies the subscriber line port 410 the call out detection circuit 54 informs the microprocessor 7 to have a calling request at the subscriber end via signal line HOOK.

The common channel 5 comprises a fixed network communication module interface 1, an internet-based phone module interface 2, the switching keys RY1a, RY2a, RY3a, RY1b. RY2b, RY3b of relays RY1, RY2, RY3 or the switching circuit 15, 25, 35 of a wireless Internet-based phone module interface 3. In addition to the common channel 5 switches each module 51, 52, 53 to connect to the exchanger 41 of the telephone system 4, it provides the required communication power supply of the telephone system 4 for calling via the ring current generator 63 and connects to the computer network linking circuit 61.

The computer network linking circuit 61 is connected to the common channel 5 which is mainly comprised by a coil CT and relay contacts RY4a, RY4b. Its function mainly cross links the voice transmission of the telephone system 4 to one of the modules (i.e. 51, 52, 53) for communication.

The computer communication switching circuit 62 comprises a relay RY4, a transistor TR14 and a resistor R114. When there is a need to connect the telephone system 4 for communication, the microprocessor 7 drives relay RY4 to work via signal line RT4, transistor TR14 and the subscriber line port 410 of the exchanger 41 is connected to the computer network linking circuit 61 via the common channel 5 to constitute communication. On the contrary when it detects there is a calling from the computer network telephone the microprocessor 7 also drives relay RY4 to have the subscriber line port 410 of the exchanger 41 connected to the computer network linking circuit 61 via the common channel 5 to constitute communication.

The ring current generator 63 comprises the common channel 5 and resistors R44, R54 and a ring generation unit 631. The circuit provides the initial communication current of the telephone system 4 for dialing up communication and also sends out the dialing tone when the calling is dialed up to provide communication current when the telephone system 4 and the computer network telephone are communicated. When there is a calling from the computer network telephone, the ring current generator 63 controls the subscriber line port 410 toward the telephone system 4 passing the common channel 5 via the signal line RN of the microprocessor 7 to send an incoming call ringing signal to drive the telephone system 4 to ring for response.

The tone decoding circuit 64 comprises a tone decoder 641, resistors R64, R74 and capacitors C14, C24 crossed the common channel 5. Its main objective is when there is a calling request in the telephone system 4 it extracts the dialed up called party telephone number in sequence and transmits to the microprocessor 7 via signal lines D1~D4 after decoding to let the microprocessor 7 determine the module 51, 52 or 53 to be communicated. The circuit also detects and decodes the busy sound and ring back sound to be processed by the microprocessor 7 after dialing.

The two-wire to four-wire converting circuit 65 comprises a coil CT, resistors R84, R94, R134, R144, R124, R104, capacitors C44, C34, an operation amplifier OPA and an operation amplifier OPB. The main function of the present circuit is to convert the two-wired signal output and two-wired signal input (the output and input equals to four wire) of conventional audio processor 67 in computer system into a conventional two-wired form of telephone system, and vice versa.

The dialer 66 is connected to the microprocessor 7 via signal lines DT1~DT4. Under the control of the microprocessor 7 it sends the dialing signal to modules 51, 52 or 53 respectively. Another function of the dialer 66 is to send a busy tone by cooperating with the loop control circuits 13, 23, 33 when the common channel 5 is busy and there is an incoming call from other communication network module.

The audio processor 67 is connected to the microprocessor 7 via signal lines DAT, CLK, INT and ACT and converts the received digital signals from the internet into audible analog signals or converts the input analog signals into digital signals and transmits them to internet and connects the computer 69 via IJSB port 68 (or other pert). Another function of the present circuit is to receive the calling of the computer network telephone via the detection and drive of the microprocessor 7.

The microprocessor 7 is in charge of information determination and handles the corresponding dialing up and selectively transmitting procedures. The activity information of the dynamic state of each module 51, 52, 53 is transmitted to the microprocessor 7 via related detection circuits to achieve the control of dialing up, selectively transmitting and answering the call.

Preferably, the memory 8 is a programmable memory which stores at least one preset data table including subscriber number list, the sequence data list of communication network of the priority response and the corresponding data list of the communication network module of the subscriber number. Cooperating with the implementation of the microprocessor 7 function the corresponding record of the memory selects corresponding communication network module according to the dialing number of the subscriber. When the called party is busy or no one responds, the microprocessor 7 implements automatic call forwarding procedures according to the preset number sequence based on the recorded subscriber number list of the memory 8.

FIG .6 shows a circuit diagram of the call out detection circuit 54 of FIG. 1 connecting to a key telephone system (KTS). Such a circuit diagram is mostly the same as FIG, 5. The difference resides in the telephone system 4 is replaced by a key telephone system 4a, i.e. the connection ends Tip, Ring of the telephone system are connected to a conventional key telephone system 42. The key telephone system 42 can connect a plurality of phone unit 421 through a subscriber line port. 420.

### Illustration of the interface of the communication network function module

The present device applies various kind of communication network module such as the fixed network telephone system module (PSTN), internet telephone (VoIP) module, computer network telephone (IM) module, wireless mobile phone system module wherein the wireless mobile phone system module can be further divided into GSM, CDMA, WiFi, WiMAX, Wireless LAN etc. The communication power supply and the incoming call ringing signal required by the subscriber line port communication of PBX or key telephone system are supplied by the communication network function module.

### Illustration of communication dialing up procedure

When the telephone of the exchanger 41 or key telephone system 42 is going to call out, if it is the operation mode of the exchanger 41 the user generally dials the representation code 0 of the external line first to access the right of using the subscriber line port. When the dialing tone of external line is heard, it goes on dialing the telephone number of the called party.

In the operation mode of the key telephone system 42 the user generally selects and pushes available external line directly to connect the external line through the subscriber line port. When a dialing tone is heard, it dials up the telephone number of the called party.

To describe conveniently, the following illustration of the communication dialing up procedure will be exemplified as the subscriber selects and pushes the external line.

### Illustration of communication procedure or the communication network module

### The calling party calls:

Taking FIG 5 as example, when the subscriber pushes the external line button of the telephone 411 it is connected to the connection end Tip via the subscriber line port 410 and transmitted to the ring current generator 63 via the rectifier BR14, optical coupler A 14 and contacts RY1a, RY2a, RY3a, resistor R44 of the common channel 5 and via R54, contacts RY3b, RY2h, RY1b sent hack to the connection end Ring to constitute a direct current loop of dialing up communication.

When the optical coupler works, the signal line HOOK is in high potential to send the calling detection signal to the microprocessor 7. The microprocessor 7 outputs the dialing tone sent by the ring generation unit G31 to the common channel 5 via signal line FZ.

After the subscriber end hears the dialing tone, it dials out the telephone number of the called subscriber (DTMF signal code). This signal is received by the tone decoder 641. The tone decoder 641 transmits the dialing up number in the format of BCD to the microprocessor 7.

The microprocessor 7 extracts the first several digits of the received telephone number to compare with the preset recorded data table (Table 1) of the memory 8 to select the corresponding module 51, 52 or 53.

**Table 1: Example of selecting communication network module**

| Memory information | Wireless internet-based phone module | Internet telephone gateway | Conventional local call network | Computer network telephone |
|---|---|---|---|---|
| # | | | | O |
| 2--------g | | | O | |
| 02-------08 | | | O | |
| 002-------009 | | | O | |
| 091------098 | O | | | |
| 050,060,070 | | O | | |

In this example, if the telephone number of the called subscriber is 0501234567 the microprocessor 7 confirms the corresponding communication network belongs to the internet telephone gateway (VoIP Gate Way), and outputs and controls the module to build up dialing up loop via signal line LP2. After the loop is built up, the microprocessor 7 releases signal line DT2 to have the calling circuit of the module stand by. The microprocessor 7 uses the received telephone number of the called subscriber to drive the dialer 66 via signal line DT1~DT4. The dialer 66 outputs DTMF signal from signal line TON and carries to line ends L12, L22 via the calling circuit 24.

After calling is completed, the microprocessor 7 outputs lew potential in signal line DT2 to turn off the calling circuit of the module and drives signal line RT2 to have the relay RY2 of the switching circuit 25 activate. The signal contacts RY2a, RY2b connect the called end to the common channel 5 to establish a voice communication between the called end and the calling end.

The microprocessor 7 releases the loop control circuit 23 of signal line LP2. The fundamental communication loop is switched and controlled by the subscriber line port 410 of the calling end.

### The called end does not respond

Generally during the process of calling if the called end is busy or no one responds the calling end has to dial up later or dial the other telephone number of the called party.

When the called end is busy after the tone decoder 641 receives the busy tone of the communication network end and decodes it and transmits to the microprocessor 7 for processing (if there is no response on the called party it is processed according to the busy line procedures after the microprocessor receives several rings of ringing hack tone).

After the microprocessor 7 receives the called end is busy it finds the record column of the number from the corresponding number group table of the memory 8 according to the dialed number 0501234567 (assuming each number group table of the called party saves 5 sets of telephone number in total) and reads the telephone number in turn to perform transfer procedure.

The microprocessor 7 finds the next set of number from the number group table and releases signal line RT2 to have the relay RY2 of the switching circuit 25 not work. The calling end provides with communication current again from the ring generation unit 631. The microprocessor 7 drives the ring generation unit 631 to send transfer tone signal.

The microprocessor 7 extracts the first several digits of the next set number to compare with the record data of the memory 8 to select the corresponding communication network module.

According to the record 0928592244 of the memory 8 when the microprocessor 7 confirms the corresponding telecommunication network belongs to the wireless local loop it outputs and controls the loop control circuit 33 to build up the dialing loop through signal line LP3. After the loop is built up, the microprocessor 7 releases signal line DT3 to have the calling circuit of the module standby. The microprocessor 7 drives the dialer 66 via signal lines DT1 ~DT4 with the number 0928592244. The dialer 66 outputs DTMF signal via signal line TON and transmits to line ends L13, L23 via the calling circuit 34.

After finishing the calling, the microprocessor 7 outputs low potential in signal line DT3 to turn off the calling circuit 34 and drives signal line RT3 to have the relay RY3 of the switching circuit 35 work. The signal contacts IZY3a, RY3b have the called party connect to the common channel 5 to constitute a communication network connection of the calling end and called end.

Then the microprocessor 7 stops the ring current generator 63 from sending transfer tone signal to complete transfer procedure.

**Table 2: the record column of telephone number (Example 1)**

| Telephone number group | Telephone number group | Telephone number group |
|---|---|---|
| 05012345G7 | 88795765 | 86918884 |
| 0928592244 | 0722420066 | |
| 0953825898 | | |
| #28825252 | | |
| 007012461235 | | |
| 00213109776834 | | |

When the called end belongs to in the first column telephone, it will be dialed out in turn when it is busy.

When the called end belongs to in the second column telephone, the second group number will be dialed out in turn when it is busy. If it is still busy the 1-irst group number will be dialed out in turn again. If it is still busy it will stop automatic transferring procedure and perform release procedure alter the calling end hangs up the phone.

When the called end belongs to the third column telephone number it will perform release procedure after the calling end hangs up the phone.

### 3. terminating communication

When the communication between the calling end and the called end of communication network module end terminates after the calling end hangs up the phone (ON Hook) the external line connection port of the calling end is disconnected from the direct current loop.

After the loop is disconnected the microprocessor 7 is switched to low potential from signal line HOOK and detects the calling is terminated.

The microprocessor 7 performs release procedure to release signal line RT2 to have the relay RY2 of the switching circuit not work.

### 4. Calling while line is busy

If the calling end and called end are in communication and there is a conventional local call coming the ringing of the signal ends L11, L 12 of the module are detected by the calling detection circuit 12 and transmitted to signal tine RG 1 of the microprocessor 7.

The microprocessor 7 drives signal line LP1 to have loop control circuit 13 work. After the direct current loop of the fixed network communication module 51 is built up, the ringing is terminated. The microprocessor 7 releases signal line DT1to have the calling circuit 12 stand by. The microprocessor 7 drives the dialer 66 via signal lines DT1~DT4. The dialer 66 outputs busy line audio frequency signal from signal line TON and carries to line ends L11, L12 via the calling circuit 14.

After finishing the sending of busy line sound the microprocessor 7 outputs low potential in signal line DT1 to turn off the calling circuit 14 of the module, releases the loop control circuit 13 of signal line LP1 and terminate the direct current loop.

When there is calling from other communication network module while it is busy, the microprocessor 7 responds the communication network module by following the abovementioned procedures to send out busy tone to inform the calling party the line is busy.

### 5. Answering the calling

Under the state of availability, if there is a calling from conventional local call, the ringing of signal ends L 11, L12 are detected by the calling detection circuit 12 and transmitted to the signal line RU 1 of the microprocessor 7.

The microprocessor 7 implements connection procedure to drive signal line RT1 to have the relay RY1 of the switching circuit 15 work and the conventional local call network is connected to the common channel 5. The ringing signal is transmitted to the subscriber line port 410 of the telephone system 4 via the common channel 5 to receive call and produce calling ring.

If the called end has no response and the calling end also gives up calling the microprocessor 7 detects the ringing is stopped via signal line RG1 and implements release procedure to release signal line RT1 to make relay RT1 not to work. The conventional local call network is exited from the common channel 5.

The microprocessor 7 keeps on monitoring the signal of signal line RG 1 of the calling detection circuit 12 and the state of signal line HOOK. If the responding signal line HOOK of the called party is in positive potential the microprocessor 7 keeps on monitoring until the communication between subscribers is ended and implements release procedure.

### Illustration of computer network telephone communication procedure

### The calling end calls

When the subscriber pushes the external line button of telephone 411 it is connected with the connection end Tip via subscriber line port 410 and sent to the ring current generator 63 through the rectifier BR14, optical coupler A 14, contacts RY1 a, RY2a, RY3a of the common channel 5, resistor R44 and back to the connection end RING via R54, contacts RY3b, RY2b, RY1b to constitute a direct current loop of dialing communication.

When the optical coupler A 14 works the signal line HOOK is in high potential to transmit the calling detection signal to the microprocessor 7. The microprocessor 7 outputs the dialing tone from the ring generation unit 631 to the common channel 5 via signal line FZ.

After the subscriber end hears the dialing tone it sends the telephone number of called subscriber (DTMF signal code) which is received by the tone decoder 641. The tone decoder 641 transmits the dialing number to the microprocessor 7 in the format of BCD.

The microprocessor 7 extracts the first several digits of the received telephone number and compares with the record data of the memory 8 to select the corresponding module 51, 52 or 53.

**Table 3: selecting communication network module**

| Memory data | Wireless internet -based phone module | Internet phone gateway | Conventional local call network | Computer network telephone |
|---|---|---|---|---|
| #-NNNNN.... | | | | O |
| 2----9 | | | O | |
| ()2 ------ 08 | | | O | |
| 002-009 | | | O | |
| 091 --- 098 | O | | | |
| 050,060,070 | | O | | |

If the telephone number of the called subscriber is #0928592244 the microprocessor 7confirms the corresponding communication network belongs to the computer network telephone.

The microprocessor 7 extracts the telephone number behind # code and sends it to the signal line DAT of the audio processor 67 and enters into computer 69 via USB port 68.

The microprocessor 7 drives signal line RT4 to the relay RY4 of the computer communication switching circuit 62 to work and the computer network linking circuit 61 is connected to the common channel 5 to complete communication connection with the main calling end.

The voice output signal VOLIT and the voice input signal VINT of the audio processor 67 are coupled to the common channel 5 via the operation amplifier OPA, OPB or the two-wire to four-wire converting circuit 65 and CT coil so that the calling end and called end are communicated each other.

### The called end does not respond

When the called end is busy, the microprocessor 7 receives the busy message of the communication network end via signal line DAT and informs the audio processor 67 the message that communication is ended and goes back standby state.

The microprocessor 7 finds the next set of number from the telephone number group table, as shown in Table 2, of the memory 8 according to the dialed number #0928592244 and releases signal line RT4 to have the relay RY4 not work. The calling end is provided with communication current by the ring generation unit 631 again. The microprocessor 7 drives the ring generation unit 631 to send transfer tone signal.

The microprocessor 7 extracts first several digits to compare with the record data of the memory 8 according to the next set of number to select the corresponding communication network module.

According to the record #0953825898 of the memory 8 the microprocessor 7 confirms the corresponding communication network still belongs to the computer network telephone.

The microprocessor 7 extracts the telephone, number 0953825898 behind # code and sends to the signal line DAT of the audio processor 67 and enters into computer 69 via USB port 68.

The microprocessor 7 stops the ring generation unit 631 from sending transfer tone. The microprocessor 7 drives the signal line RT4 to have the relay RY4 of the computer communication switching circuit 62 work and the computer network linking circuit 61 is connected to the common channel 5 to compete transfer procedure.

**Table 4: the record table of telephone number (Example 2)**

| Telephone number group | Telephone number group | Telephone number group |
|---|---|---|
| 050J234567 | 88795765 | 86918884 |
| #0928592244 | 0722420066 | |
| #0953825898 | | |
| 38825252 | | |
| 07012461235 | | |
| 00213109776834 | | |

When the called end belongs to the first column telephone number, it will be dialed out in turn when the line is busy.

When the called end belongs to the second column telephone number, it will dial out the second set number in turn when the line is busy. If the line is still busy it will dial out the first set numbers in turn. If the line is still busy it will stop automatic transfer procedure and wait the calling end to hang up the phone and implement release procedure.

When the called end belongs to the third column telephone number, if the line is busy it will wait the calling end to hang up the phone and implement release procedure.

### End communication

When the communication between the calling end and the called end of the computer network phone is ended, after the calling end hangs up the phone (ON Hook) the microprocessor 7 is switched to low potential by signal line HOOK and detects the calling is ended. The microprocessor 7 implements release procedure to release signal line RT4 to have the relay RY4 of the computer communication switching circuit 62 not work. As a result, the internet-based phone module 52 is exited from the common channel 5.

At this moment the microprocessor 7 sends termination message to the audio processor 67 via signal line DAP and goes back the state of standby.

### Respond when there is a call

Under the state of availability if there is a call from the computer network phone the signal line ACT of the audio processor 67 is in high potential and informs microprocessor 7.

The microprocessor 7 outputs per two seconds to drive the ring current generator 63 via signal line RN to send ringing signal once to the subscriber line port 410 of the telephone system 4 via the common channel 5. Exchanger 41 or key telephone system 42 receives calling and generates incoming call ring sound by itself.

If the called party has no response and the calling party of the computer network phone also gives up calling. The microprocessor 7 detects the calling is given up via signal line ACT and stops driving the ring current generator 63.

If the called party responds the signal line HOOK is in positive potential. The microprocessor 7 stops driving ring current generator 63 and drives signal line RT4 to have the relay RY4 of the computer communication switching circuit 62 work and the computer network linking circuit 61 is connected to the common channel 5 to constitute communication linkage of both parties.

## Claims

1. A system for selectively coupling a subscriber line port (410, 420) of a telephone system (4, 4a) to one of a plurality of voice communication devices including a fixed network communication module (51), an internet-based phone module (52), and a wireless internet-based phone module (53), the telephone system (4, 4a) including at least one phone unit (411,421) connected thereto, **characterized in that** the system comprising:
a microprocessor (7) with a memory (8);
a common channel (5) selectively coupled to the fixed network communication module (51), the internet-based phone module (52), and the wireless internet-based phone module (53), which is further connected to the microprocessor (7) through a ring current generator (63) and connected to the telephone system (4, 4a) through a call out detection circuit (54);
a fixed network communication module interface (1) for coupling the fixed network communication module (51) to the microprocessor (7);
an internet-based phone module interlace (2) for coupling the internet-based phone module (52) to the microprocessor (7);
a wireless internet-based phone module interface (3) for coupling the wireless internet-based phone module (53) to the microprocessor (7);
a computer network linking circuit (61) connected to the common channel (5);
a computer communication switching circuit (62) connected to the microprocessor (7), adaptive to couple or un-couple the computer network linking circuit (61) to the common channel (5);
an audio processor (67) coupled to the microprocessor (7);
a two-wire to four-wire converting circuit (65) connected between the computer network linking circuit (61) and the audio processor (67);
a tone decoder (641) connected between the microprocessor (7) and the common channel (5); and
a dialer (66) connected to the microprocessor (7), adaptive to generate a dialing signal or a line-busy signal to the fixed network communication module (51), the internet-based phone module (52), and the wireless internet-based phone module (53) under control of the microprocessor (7);
wherein when the phone unit (411, 421) or the telephone system (4) dials a called end phone number corresponding to one of the fixed network communication module (51), the internet-based phone module (52), or the wireless internet-based phone module (53), the telephone system (4) is connected to the common channel (5), a ring current generated by the ring current generator (63) is then supplied to the phone unit (411, 421), the called end phone number is decoded by the tone decoder (641), and thereby the microprocessor (7) in correspondence to the called end phone number couple the telephone system (4, 4a) to one of the fixed network communication module (51), the internet-based phone module (52), or the wireless internet-based phone module (53) to establish a voice communication therebetween according to a preset data table stored in the memory (8).

2. The system as claimed in Claim 1, **characterized in that** the telephone system (4) comprises an exchanger telephone system (41) with a plurality of phone units (411).

3. The system as claimed in Claim 1, **characterized in that** the telephone system (4a) comprises a key telephone system (42) with a plurality of phone units (421).

4. The system as claimed in Claim 1, **characterized in that** the fixed network communication module interface (1) comprises an incoming call detection circuit (12), a loop control circuit (13), a calling circuit (14), and a switching circuit (15).

5. The system as claimed in Claim 1, **characterized in that** the internet-based phone module interface (2) comprises an incoming call detection circuit (22), a loop control circuit (23), a calling circuit (24), and a switching circuit (25).

6. The system as claimed in Claim 1, **characterized in that** the wireless internet-based phone module interface (3) comprises an incoming call detection circuit (32), a loop control circuit (33), a calling circuit (34), and a switching circuit (35).

7. A method for selectively coupling a subscriber line port (410, 420) of a telephone system (4, 4a) to one of a plurality of voice communication devices including a fixed network communication module (51), an internet-based phone module (52), and a wireless internet-based phone module (53), the telephone system (4, 4a) including at least one phone unit (411, 421) connected thereto, **characterized in that** the method comprising the following steps:
(a) connecting the fixed network communication module (51), the internet-based phone module (52), and the wireless internet-based phone module (53) to a microprocessor (7) via a fixed network communication module interface (1), an internet-based phone module interface (2), and a wireless internet-based phone module interface (3) respectively;
(b) connecting the fixed network communication module (51), the internet-based phone module (52), and the wireless internet-based phone module (53) to a common channel (5), and connecting the common channel (5) to the microprocessor (7) via a ring current generator (63), and connecting the common channel (5) to the telephone system (4,4a);
(c) connecting a computer network linking circuit (61) to the common channel (5);
(d) connecting a computer communication switching circuit (62) to the microprocessor (7), the computer communication switching circuit (62) being adaptive to couple or un-couple the computer network linking circuit (61) to the common channel (5) under control of the microprocessor (7);
(e) connecting a two-wire to tour-wire converting circuit (65) between the computer network linking circuit (61) and an audio processor (67);
(f) connecting a tone decoder (641) between the microprocessor (7) and the common channel (5);
(g) connecting a dialer (66) to the microprocessor (7), the dialer (66) being adaptive to generate a dialing signal or a line-busy signal to the fixed network communication module (51), the internet-based phone modu1e (52), and the wireless internet-based phone module (53) under control of the microprocessor (7); and
(h) when the phone unit (411, 421) of the telephone system (4, 4a) dials a called end phone number corresponding to one of the fixed network communication module (51), the internet-based phone module (52), or the wireless internet-based phone module (53), the telephone system (4, 4a) is connected to the common channel (5), a ring current generated by the ring current generator (63) is then supplied to the phone unit (411, 421), the called end phone number is decoded by the tone decoder (641), and thereby the microprocessor (7) in correspondence to the called end phone number couple the telephone system (4, 4a) to one of the fixed network communication module (S1), the internet-based phone module (52), or the wireless internet-based phone module (53) to establish a voice communication therebetween according to a preset data table stored in the memory (8).

8. The method as claimed in Claim 7, **characterised in that** the telephone system (4) comprises an exchanger telephone system with a plurality of phone units (411).

9. The method as claimed in Claim 7, **characterized in that** the telephone system (4a) comprises a key telephone system with a plurality of phone units (421).
